# EUROPEAN PATENT APPLICATION

(11) **EP 3 240 236 A1**
(43) Date of publication of application: **01.11.2017**
(21) Application number: 16290073.2
(22) Date of filing: 25.04.2016
(51) Int. Cl.: H04L 12/24, H04L 12/26

(54) **AN APPARATUS FOR MANAGING PERFORMANCE OF A WI-FI NETWORK AND THE RELATE METHOD**

(71) Applicant: ALCATEL LUCENT, 92100 Boulogne-Billancourt (FR)
(72) Inventor: Gacanin, Haris, 2018 Antwerpen (BE)
(74) Representative: Plas, Axel Ivo Michel

(57) **Abstract**

An apparatus (1) for managing performance of a Wi-Fi network (2) comprising one or more access points (200), comprising:
- a performance monitor (101):
o collecting network parameters (30) of a configuration of said Wi-Fi network (2) from said access points (200);
o identifying a performance symptom (20) of said Wi-Fi network (2) when comparing said network parameters (30) to predefined performance thresholds (300); and
o generating one or more recommendation signals (40) in function of said performance symptom (20); and

- a performance manager (102) comprising:
o a recommendation processing unit (112) generating processed recommendations signals (41); and
o a configuration management unit (122) executing in function of said processed recommendations signals (41) a plurality of algorithms (123) to determine a network configuration (21) for which said performance symptom (20) is solved.

## Description

### Technical Field

The present invention relates to the field of home network diagnostic and troubleshooting. More particularly, the present invention relates to the field of Wi-Fi home network diagnostic and troubleshooting.

### Background

With the development of new applications and technologies, such as digital television, on-line gaming and home automation, Internet access must extend to various types of home devices, for example a set-top box, a game console, a home automation system, several desktops and laptops, etc.. All these home devices are interconnected by means of a home network, such as a Wi-Fi network, which needs to be administrated, monitored and configured. Dense Wi-Fi deployment is one of the ways to significantly increase the customer quality of service, or QoS, per device.

Access points are deployed in such home networks in a random fashion across different homes within a geographic area. This results in interferences, in problems with load balancing, in problems with handover between private and public domains, etc.. Ideally, access points should be deployed in home networks on the "plug-and-play" basis and configure themselves, and they should also dynamically optimize their parameters when the home network is running in order to ensure the management of the home network stays simple and to guarantee the QoS. For example, access points should react to changes in the home network such as user presence, traffic demand, or the energy consumption constraints.

With a Self-Optimizing Network, or SON, the planning, the configuration, the management, the optimization and the healing of access networks is made simple and fast. With the SON functionality, newly added access points are self-configured in line with a "plug-and-play" paradigm while all operational access points will regularly self-optimize parameters and algorithmic behaviour in response to observed network performance and radio conditions. Furthermore, with the SON functionality, self-healing mechanisms can be triggered to temporarily compensate for a detected equipment outage, while awaiting a more permanent solution. The Wi-Fi SON functionality monitors network parameters in the form of read parameters from the Wi-Fi network and optimizes the performance of the Wi-Fi network by modifying the network parameters per use case basis. For example the Wi-Fi SON functionality modifies the coverage, the interference and the multi-band selection in order to optimize the traffic load balancing. The Wi-Fi SON functionality further gives out write parameters as outputs into the Wi-Fi network.

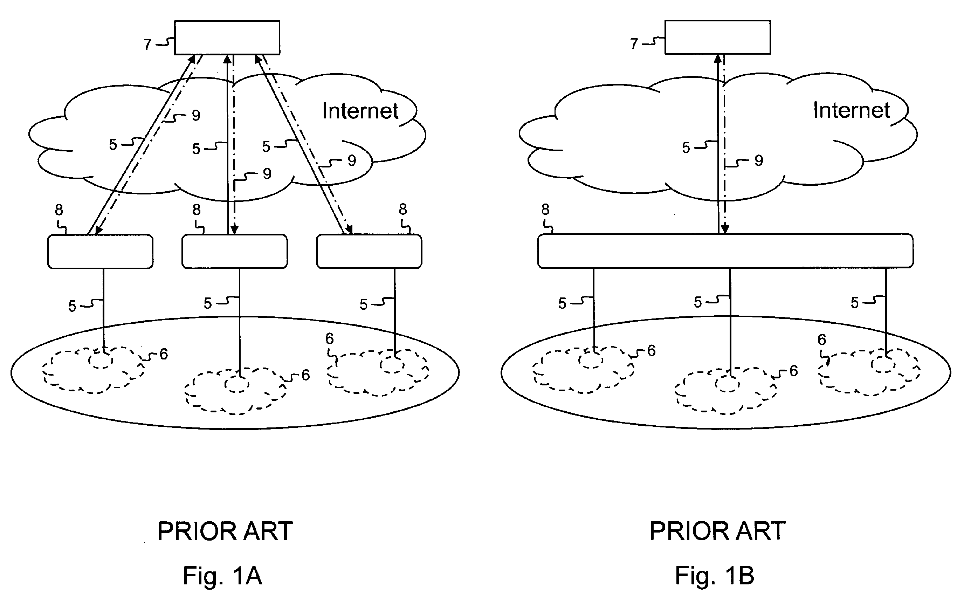

Numerous network parameters heavily depend on each other, and the SON functions often tend to modify the network parameters simultaneously, which results in configuration conflicts in the home network. The modification of network parameters must therefore be coordinated among different use cases. Two general models of remote diagnostic and troubleshooting exist that coordinate the modification of network parameters. In the first case illustrated in Fig. 1A, the collection of the network parameters 5 of the home networks 6 and the troubleshooting happens at the side of the service operator 7. The service operator 7 initiates the collection of network parameters 5 over the plurality of access points 8, processes the network parameters 5 and performs the actions 9 to solve the identified problems. In the second case illustrated in Fig. 1B, the collection of the network parameters 5 is initiated by the access points 8 themselves, while the service operator 7 processes them and performs the actions 9 to solve the identified problems. Both cases of Fig. 1A and Fig. 1B require compatibility between the access points 8 and the service operator 7. Most service operators are nowadays not able to manage the radio environment among various vendor solutions, or even to unify their management approach among access points vendors. This makes the solutions of Fig. 1A and Fig. 1B complex and increases the risk that configuration conflicts rise from the simultaneous modification of network parameters heavily depending on each other.

### Summary of the Invention

It is an objective to disclose a device and the related method that overcome the above identified shortcomings of existing solutions. More particularly, it is an objective to disclose an apparatus for managing performance of a Wi-Fi network comprising one or more access points, wherein the apparatus captures the effect of different network parameters on the performance of the Wi-Fi network when troubleshooting.

According to a first aspect of the invention, the above defined objectives are realized by an apparatus for managing performance of a Wi-Fi network comprising one or more access points, the apparatus comprising:
- a performance monitor configured to:
   o collect network parameters of a configuration of the Wi-Fi network from the access points;
   o compare the network parameters to predefined performance thresholds;
   o identify exceeding a predefined performance threshold as a performance symptom of the Wi-Fi network; and
   o generate one or more recommendation signals in function of the performance symptom; and
- a performance manager comprising:
   o a recommendation processing unit configured to process the recommendations signals, thereby generating processed recommendations signals; and
   o a configuration management unit adapted to execute in function of the processed recommendations signals a plurality of algorithms to determine a network configuration for which the performance symptom is solved.

The use of a plurality of algorithms by the configuration management unit ensures that the modification of a network parameter minimizes the risk of a configuration conflict due to the corresponding modification of another network parameter dependent on the first. This way, the interactions between different network parameters are coordinated and are taken into account when generating recommendations to a Wi-Fi network. The diagnostic of possible problems of the Wi-Fi network is made efficient and troubleshooting is made easier within the Wi-Fi network. Additionally, the performance of the Wi-Fi network and consequently the QoS of an end-user are guaranteed. The apparatus may also easily be combined with data analytics to give more insight into the experience of an end-user of the Wi-Fi network. In this way, a manual troubleshooting and the intervention by a service operator's technician at the end-user's residence is avoided.

According to an optional aspect of the invention, the performance manager is further configured to initiate the network configuration in the Wi-Fi network.

This way, the network configuration is initiated and executed in the Wi-Fi network, thereby solving the performance symptom identified from the network parameters. This way, the performance of the Wi-Fi network is improved.

According to an optional aspect of the invention, the performance monitor comprises a Bayesian network, such as a belief network.

According to an optional aspect of the invention, the performance monitor comprises a belief network. This way, network parameters are used as input to the Bayesian or belief network. The network parameters are set to the corresponding Bayesian or belief network nodes having their numerical values discretized into different ranges. For example, the nodes of the Bayesian or belief network may be in different states such as "good", "medium" or "low", and the resulting recommendation signals may have two Boolean values "true" or "false".

According to an optional aspect of the invention, the performance manager comprises a Wi-Fi self-optimizing network.

This way, the monitoring and the collection of network parameters of the Wi-Fi network are combined with self-optimizing functions. The Wi-Fi self-optimizing network processes the recommendation signals of the performance monitor and performs a plurality of algorithms to determine the network configuration such that the performance symptoms are solved. This improves the performance of the Wi-Fi network.

According to an optional aspect of the invention, the plurality of Wi-Fi algorithms comprises one or more of the following:
- an interference management algorithm;
- an extender detection algorithm;
- a channel selection algorithm;
- a predictive channel algorithm;
- a load balancing algorithm;
- an access point selection algorithm;
- a device detection algorithm.

4 According to an optional aspect of the invention, the network parameters are network parameters at one or more of the following network layers:
- PHY layer;
- MAC layer;
- NET layer;
- APP layer.

Network parameters of the PHY can for example be a channel frequency response or CFR, a signal-to-noise ratio or SNR, noise, etc.. Network parameters of the MAC layer can for example be a cyclic redundancy check or CRC, a throughput, a bit error rate or BER, etc.. Network parameters of the NET layer can for example be an IP, an ID, a network, etc.. Alternatively, network parameters may be derived from collected network parameters. For example, a signal-to-noise ratio may be calculated from a channel frequency response and from noise.

According to an optional aspect of the invention, the performance monitor is further configured to provide an operator of the Wi-Fi network with the recommendation signals.

This way, the diagnostic of possible problems of the Wi-Fi network is made efficient and troubleshooting is made easier within the Wi-Fi network. The apparatus may also easily be combined with data analytics to give an operator of the Wi-Fi network more insight into the experience of an end-user of the Wi-Fi network. In this way, a manual troubleshooting and the intervention by a service operator's technician at the end-user's residence is avoided.

According to an optional aspect of the invention, the performance monitor is further configured to collect the network parameters upon detection of a network problem or upon a predefined schedule.

This way, the diagnostic and the troubleshooting for the Wi-Fi network is made more reactive to network changes. This ensures a reactive adaptation of the network configuration and thereby guarantees the QoS of an end-user. This way, the effect of the modification of a network parameter can be monitored by the performance monitor at the following iteration of collection of network parameters.

According to a second aspect of the present invention, there is provided a method for managing performance of a Wi-Fi network comprising one or more access points, the method comprising the steps of:
- collecting network parameters of a configuration of the Wi-Fi network from the access points;
- comparing the network parameters to predefined performance thresholds;
- identifying exceeding a predefined performance threshold as a performance symptom of the Wi-Fi network;
- generating one or more recommendation signals in function of the performance symptom;
- processing the recommendations signals, thereby generating processed recommendations signals;
- executing in function of the processed recommendations signals a plurality of algorithms to determine a network configuration for which the performance symptom is solved.

The use of a plurality of algorithms ensures that the modification of a network parameter does not result in a configuration conflict due to the corresponding modification of another network parameter dependent on the first. This way, the interactions between different network parameters are coordinated and are taken into account when generating recommendations to the Wi-Fi network. In other words, thanks to the use of a plurality of algorithms, the risk of a configuration conflict is minimized. The diagnostic of possible problems of the Wi-Fi network is made efficient and troubleshooting is made easier within the Wi-Fi network. Additionally, the QoS of an end-user is guaranteed. The method may also easily be combined with data analytics to give more insight into the experience of an end-user of the Wi-Fi network. In this way, a manual troubleshooting and the intervention by a service operator's technician at the end-user's residence is avoided.

### Brief Description of the Drawings

Fig. 1A schematically illustrates an embodiment of a home network diagnostic and troubleshooting of a home network according to the prior art.
Fig. 1B schematically illustrates an embodiment of a home network diagnostic and troubleshooting of a home network according to the prior art.
Fig. 2 schematically illustrates an embodiment of an apparatus according to the present invention.
Fig. 3 schematically illustrates an embodiment of the steps of the method according to the present invention.
Fig. 4 schematically illustrates a suitable computing system for hosting the apparatus of Fig. 2.

### Detailed Description of Embodiment(s)

According to a prior art embodiment shown in Fig. 1A, the collection of network parameters 5 of home networks 6 comprising access points 8 and troubleshooting happens at the side of a service operator 7. The service operator 7 initiates the collection of network parameters 5 over the plurality of access points 8, processes the network parameters 5 and performs actions 9 to solve the identified problems in the home networks 6.
ording to a prior art embodiment shown in Fig. 1B, the collection of network parameters 5 of home networks 6 comprising access points 8 is initiated by the access points 8 themselves, while a service operator 7 processes them and performs actions 9 to solve the identified problems in the home networks 6.

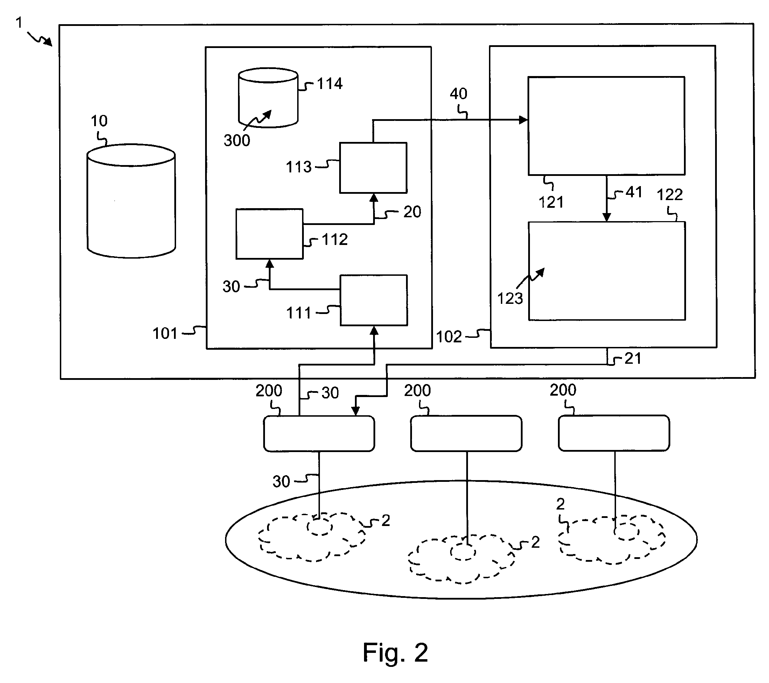

According to an embodiment shown in Fig. 2, an apparatus 1 comprises a performance monitor 101 and a performance manager 102. The apparatus 1 is adapted to manage performance of a Wi-Fi network 2 comprising one access point 200. According to an alternative embodiment, the apparatus 1 is adapted to manage performance of a Wi-Fi network 2 comprising a plurality of access points 200. According to a further alternative embodiment, the apparatus 1 is adapted to manage performance of a plurality of Wi-Fi networks 2 comprising one or more access points 200. According to a further alternative embodiment, an access point 200 comprises the apparatus 1. The performance monitor 101 of the apparatus 1 comprises a network parameters receiver 111 adapted to receive the network parameters 30 from the access point 200. The network parameters 30 are network parameters of the PHY layer, of the MAC layer, of the NET layer and/or of the APP layer. Network parameters 30 of the PHY are for example a channel frequency response or CFR, a signal-to-noise ratio or SNR, noise, etc.. Network parameters 30 of the MAC layer are for example a cyclic redundancy check or CRC, a throughput, a bit error rate or BER, etc.. Network parameters 30 of the NET layer are for example an IP, an ID, a network, etc.. Alternatively, network parameters 30 are derived from collected network parameters 30. For example, a signal-to-noise ratio may be calculated from a channel frequency response and from noise. The network parameters 30 are collected upon detection of a network problem, for example a performance problem detected by the apparatus 1. According to an alternative embodiment, the network parameters 30 are collected upon a predefined schedule, for example periodically such as every ten minutes, every thirty minutes, every hour, every two hours, etc.. The performance monitor 101 further comprises a comparator 112 adapted to compare the network parameters 30 to predefined performance thresholds 300. Each network parameter 30 is compared to a predefined performance threshold 300. According to an alternative embodiment, a combination of two or more network parameters 30 is compared to a predefined performance threshold 300. The predefined performance thresholds 300 are manually inputted in the apparatus 1. According to an alternative embodiment, the predefined performance thresholds 300 are programmed in the apparatus 1. The predefined performance thresholds 300 may be retrieved from a database 115 of the performance monitor 101. For example, the network parameters 30 are set at said comparator 112 of said performance monitor 101 having their values discretized into different ranges. For example, a network parameter 30 may be a received signal strength indicator and its value can be found within several regions denoted by 0-10 dB, 10-20 dB, etc.. The predefined performance thresholds 300 in this case are 0 dB, 10 dB, 20 dB, etc.. The comparator 112 evaluates the value of the network parameter 30 can for example be in one of three states for example a first state "good", a second state "medium" and a third state "low" depending on the comparison of the network parameter 30 with the predefined performance thresholds 300. The comparator 112 identifies if the network parameter 30 exceeds a predefined performance threshold 300. For positive numerical values, exceeding a predefined performance threshold 300 is understood as having a numerical value larger than the predefined performance threshold 300. For negative numerical values, exceeding a predefined performance threshold 300 is understood as having a numerical value smaller than the predefined performance threshold 300. If a network parameter 30 exceeds a predefined performance threshold 300, the comparator 112 compares the network parameter 30 to a predefined performance threshold 300 with a larger numerical value until the network parameter does not exceed a predefined performance threshold 300. The comparator 112 then identifies the state in which the network parameter 30 lies. The comparator 112 identifies exceeding a predefined performance threshold 300 as a performance symptom 20 of the Wi-Fi network 2. The performance monitor 101 further comprises a recommendation generator 113 configured to receive the performance symptom 20 of the Wi-Fi network 2 from the comparator 112. The recommendation generator 113 generates recommendation signals 40 in function of the performance symptom 20. For example, the recommendation generator 113 generates a recommendation signal 40 having one of the following Boolean values "true" or "false". The performance manager 102 of the apparatus 1 comprises a recommendation processing unit 112 adapted to receive the recommendation signals 40 from the recommendation generator 113 of the performance monitor 101 and further adapted to process the recommendation signals 40. The recommendation processing unit 112 therefore generates processed recommendation signals 41. According to an alternative embodiment, the recommendation generator 113 also provides an operator of the Wi-Fi network 2 with the recommendation signals 40. The performance manager 102 further comprises a configuration management unit 122 comprising a plurality of Wi-Fi algorithms 123. The configuration management unit 122 executes a plurality of algorithms 123 in function of the processed recommendation signals 41 in order to determine a network configuration 21 for which the performance symptom 20 is solved. The performance symptom 20 is solved when for example the network parameter 30 for which the performance symptom 20 was generated does not exceed a predefined performance threshold 300 anymore. The performance manager 102 is further configured to initiate the network configuration 21 in the Wi-Fi network 2. The performance monitor 101 preferably comprises a Bayesian network, more particularly a belief network. The performance manager 102 comprises a Wi-Fi self-optimizing network or Wi-Fi SON. The plurality of algorithms 123 comprises one or more of the following algorithms: an interference management algorithm, an extender detection algorithm, a channel selection algorithm, a predictive channel algorithm, a load balancing algorithm, an access point selection algorithm, a device detection algorithm. According to an alternative embodiment, the apparatus 1 also comprises a database 10 comprising the predefined performance thresholds 300 and/or the network parameters 30 and/or the performance symptoms 20 and/or the network configuration 21. The performance monitor 101 is then further adapted to store the network parameters 30 in the database 10 and/or to store the performance symptom 20 in the database 10, and the performance manager 102 is further adapted to retrieve the algorithms 123 from the database 10 and/or to store the network configuration 21 in the database 10.

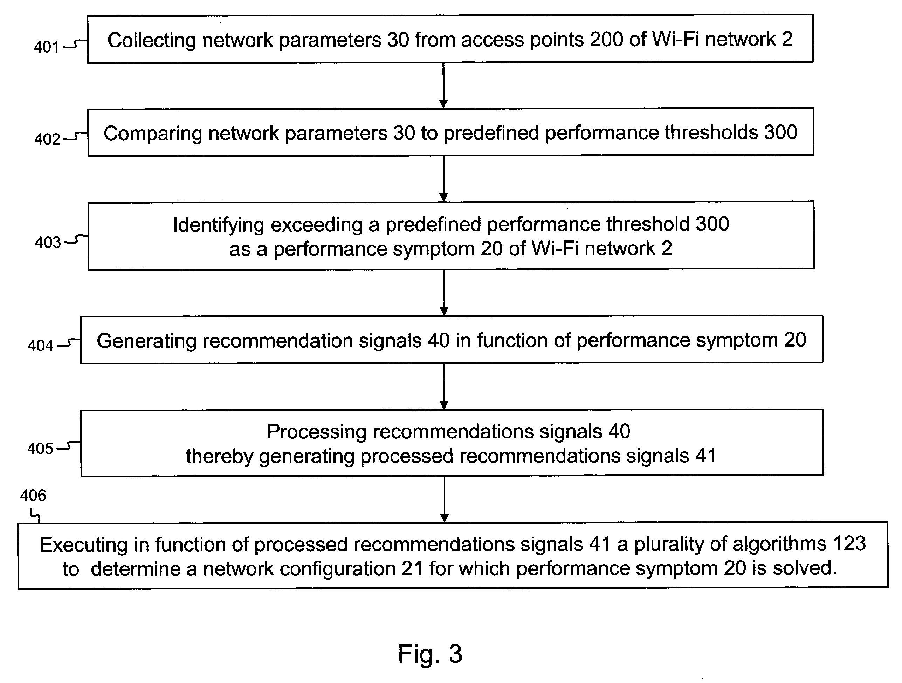

According to an embodiment shown in Fig. 3, the steps of the method according to the present invention are schematically depicted. In step 401, network parameters 30 of a configuration of a Wi-Fi network 2 are collected from access points 200 of the Wi-Fi network 2. Then, in step 402, the network parameters 30 are compared to predefined performance thresholds 300. In step 403, the result of the comparison is analysed and exceeding a predefined performance threshold 300 is identified as a performance symptom 20 of the Wi-Fi network 2. Then in step 404, one or more recommendation signals 20 are generated in function of the performance symptom 20. In step 405, the recommendations signals 40 are then processed, thereby generating processed recommendations signals 41. Then, in the final step 406, a plurality of algorithms 123 are selected in function of the processed recommendations signals 41 and are executed in order to determine a network configuration 21 for which the performance symptom 20 is solved.

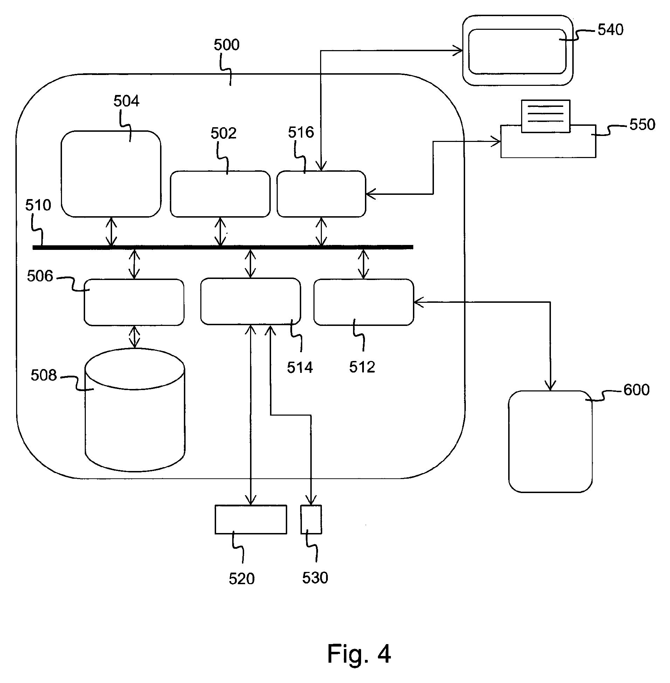

Fig. 4 shows a suitable computing system 500 for hosting the apparatus 1 of Fig. 2. Computing system 500 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing system 500, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1 Gb Ethernet interfaces that enables computing system 500 to communicate with other devices and/or systems, for example mechanisms for communicating with one or more other computing systems 600. The communication interface 512 of computing system 500 may be connected to such another computing system by means of a local area network (LAN) or a wide area network (WAN, such as for example the internet, in which case the other computing system 500 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a Virtual Machine above the physical hardware.

The apparatus 1 of Fig. 2 can be implemented as programming instructions stored in local memory 504 of the computing system 500 for execution by its processor 502. Alternatively the apparatus 1 of Fig. 2 could be stored on the storage element 508 or be accessible from another computing system 600 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An apparatus (1) for managing performance of a Wi-Fi network (2) comprising one or more access points (200), said apparatus (1) comprising:
- a performance monitor (101) configured to:
o collect network parameters (30) of a configuration of said Wi-Fi network (2) from said access points (200);
o compare said network parameters (30) to predefined performance thresholds (300);
o identify exceeding a predefined performance threshold (300) as a performance symptom (20) of said Wi-Fi network (2); and
o generate one or more recommendation signals (40) in function of said performance symptom (20); and
- a performance manager (102) comprising:
o a recommendation processing unit (121) configured to process said recommendations signals (40), thereby generating processed recommendations signals (41); and
o a configuration management unit (122) adapted to execute in function of said processed recommendations signals (41) a plurality of algorithms (123) to determine a network configuration (21) for which said performance symptom (20) is solved.

2. An apparatus (1) according to claim 1, wherein said performance manager (102) is further configured to initiate said network configuration (21) in said Wi-Fi network (2).

3. An apparatus (1) according to any of the preceding claims, wherein said performance monitor (101) comprises a Bayesian network, such as a belief network.

4. An apparatus (1) according to any of the preceding claims, wherein said performance manager (102) comprises a Wi-Fi self-optimizing network.

5. An apparatus (1) according to any of the preceding claims, wherein said plurality of Wi-Fi algorithms (123) comprises one or more of the following:
- an interference management algorithm;
- an extender detection algorithm;
- a channel selection algorithm;
- a predictive channel algorithm;
- a load balancing algorithm;
- an access point selection algorithm;
- a device detection algorithm.

6. An apparatus (1) according to any of the preceding claims, wherein said network parameters (30) are network parameters at one or more of the following network layers:
- PHY layer;
- MAC layer;
- NET layer;
- APP layer.

7. An apparatus (1) according to any of the preceding claims, wherein said performance monitor (101) is further configured to provide an operator of said Wi-Fi network (2) with said recommendation signals (40).

8. An apparatus (1) according to any of the preceding claims, wherein said performance monitor (101) is further configured to collect said network parameters (30) upon detection of a network problem or upon a predefined schedule.

9. A method for managing performance of a Wi-Fi network (2) comprising one or more access points (200), said method comprising the steps of:
- collecting network parameters (30) of a configuration of said Wi-Fi network (2) from said access points (200);
- comparing said network parameters (30) to predefined performance thresholds (300);
- identifying exceeding a predefined performance threshold (300) as a performance symptom (20) of said Wi-Fi network (2);
- generating one or more recommendation signals (40) in function of said performance symptom (20);
- processing said recommendations signals (40), thereby generating processed recommendations signals (41);
- executing in function of said processed recommendations signals (41) a plurality of algorithms (123) to determine a network configuration (21) for which said performance symptom (20) is solved.
